# EUROPEAN PATENT APPLICATION

(11) **EP 3 656 702 A1**
(43) Date of publication of application: **27.05.2020**
(21) Application number: 18207500.2
(22) Date of filing: 21.11.2018
(51) Int. Cl.: B65G 1/06, B66F 9/06, B25J 5/00, B25J 19/02, G06Q 50/28, G05B 19/418

(54) **MOBILE INDUSTRIAL ROBOT WITH SECURITY SYSTEM FOR PALLET DOCKETING**

(71) Applicant: Mobile Industrial Robots A/S, 5220 Odense SOE (DK)
(72) Inventor: Frank, Carsten, 5560 Aarup (DK); Pedersen, Jeppe, 5000 Odense C (DK); Nielsen, Soeren, 6400 Soenderborg (DK)
(74) Representative: Conroy, John

(57) **Abstract**

There is provided a mobile industrial robot with a security system based on 3D camera technology mounted on the robot for detecting obstacles located in a pallet storage rack area in order to prevent the robot from colliding with obstacles on the pallet storage rack.

## Description

### FIELD OF THE INVENTION

The present invention relates generally to a pallet storage system utilizing robot vehicles for transporting pallets to and from a storage rack. Specifically, the invention is directed to a security system based on 3D camera technology mounted on the robot vehicles for detecting obstacles located in the storage rack area in order to prevent the robot vehicles from colliding with obstacles on the pallet storage rack.

### BACKGROUND OF THE INVENTION

Mobile industrial robots may be used for a wide range of uses, duty cycles, and applications.

Automated storage and retrieval systems reduce costs and damage in storing goods because far fewer workers are needed for otherwise similar operations. In typical systems, a crane-like apparatus attached to the ceiling and floor of the warehouse is used to transport and position loads. Some systems have developed motorized carts which are used to transport, access, and store pallets of material in multi-story railed structures. For example, in a warehouse, a product on a pallet may be lifted and retracted into a loading elevator shaft by a forklift-like attachment. The load is transported to a desired level of the railway, removed from the elevator, and placed on a temporary pallet support near the elevator. Next, an aisle cart corresponding to the level where the load was transported moves underneath the load. A lifting row cart is positioned on top of the aisle cart and actuates a lifting mechanism to remove the load from the temporary pallet support. The aisle cart then transports the load and row cart down the aisle to a designated row, where the row cart separates from the aisle cart while carrying the load down a row railway to the final destination of the load. When a load is retrieved from the storage structure, the process is reversed. These actions are typically all automated by a control center at the warehouse.

Existing lifting carts are difficult and time-consuming to maintain as well, since access to the internal components typically requires a technician to take time to at least partially disassemble portions of the cart, make the necessary inspections and repairs, and then take time again to reassemble the cart to its original state.

US3973685 discloses a photoelectric sensing apparatus for a pallet carrying robot vehicle. The sensing apparatus includes a plurality of photoelectric sensors mounted on the robot vehicle for sensing the location of stored pallets mounted on storage rails in order to signal the control logic to stop the robot vehicle at a desired position. If the robot vehicle is unloaded, one sensor functions to sense the location of a stored pallet after the robot vehicle has moved directly under the stored pallet. If the robot vehicle is loaded, another sensor functions to sense the location of a stored pallet immediately before the robot vehicle reaches the same. The photoelectric sensors are not always reliable (e.g.due to external factors, such as dirt) and need calibration. Moreover, such sensors constitute additional equipment on the robot vehicle rendering it more expensive and requires regular service and change.

This application addresses these and other problems.

### SUMMARY OF THE INVENTION

A mobile industrial robot, AGV or similar robot vehicle for carrying load, such as a pallet, and the handling thereof is disclosed herein. The robot comprises means for supporting a pallet, and a lifting system configured to raise and lower the pallet. An actuation device may be configured to generate an activation signal in response to being actuated by an operator, and a vehicle controller may be configured to place the vehicle in an automated mode of operation in response to receiving the activation signal.

Specifically, there is provided a mobile industrial robot movable into and out of a storage rack for depositing a (loaded) pallet onto said storage rack, said robot comprising
- a system for lifting a loaded pallet;
- a control unit for controlling the movement of the robot;
- a 3-D camera mounted on the robot for sensing a whether or not a loaded pallet an/or other obstacle is on the storage rack ahead of the robot,
wherein the 3-D camera informs the control unit of the presence of a loaded pallet or other obstacle is on the storage rack ahead of the robot, and said control unit prevents the robot from depositing the pallet onto the storage rack unit until the loaded pallet and/or other obstacle has been removed from the storage rack ahead of the robot.

### DETAILED DESCRIPTION OF THE INVENTION

In the present disclosure the term mobile industrial robot, automatically guided vehicle (AGV) or robot vehicle is used for any mobile robot having a navigation system, which may be guided by e.g. vision, magnets, geoguidance, gyroscope, and lasers. It is therefore understood that the term also comprises Autonomous Mobile Robots (AMR).

In the present disclosure the storage rack means a rack onto which pallets may be loaded and deloaded. Pallets may be of various type and size, such as a Euro-Pallet.

When the robot approaches the pallet rack or is positioned in front of the storage rack it processes the images from the 3D camera. In the processing unit of the robot/camera an algorithm is present which detects when objects are visible on the storage rack. As the camera is a 3D camera it is also capable of detecting depth information of the image so the algorithm can be made to recognize objects on top of the storage rack and discard objects behind the storage rack.

When the algorithm detects that an object is present on the storage rack the processing unit handling the movements of the mobile industrial robot stops the mobile industrial robot from driving into the storage racks if the mobile industrial robot is on a mission to deliver a pallet or payload onto the storage rack.

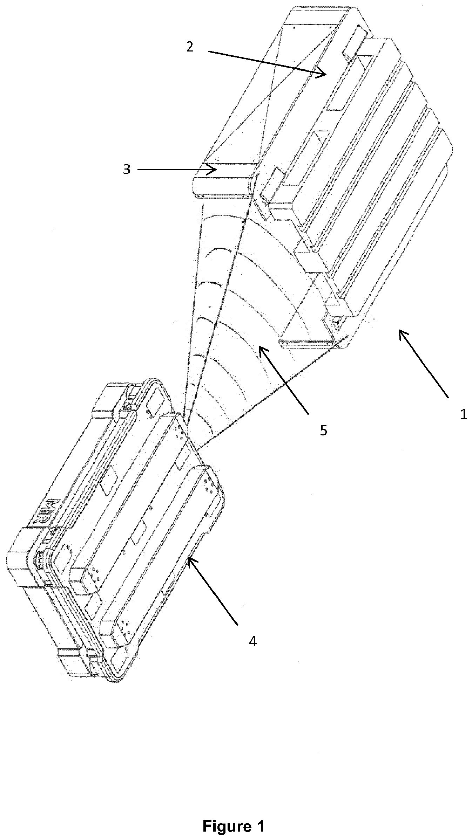

The processing unit for the mobile industrial robot can also be programmed to set an alarm condition if the mobile industrial robot was on a mission to collect a pallet or payload on the storage rack and the 3D camera algorithm detects that no pallet or payload is present. Referring to figure 1 the automated storage system of the present invention is shown. The system comprises a storage rack (1) with horizontal rails (2) supported by vertical columns (3). Each rail may have features for correct positioning of the pallet on the storage rack.

The mobile industrial robot (4) is adapted to ride along the rails and, can move in a space under the pallet stored on the rails (2). However, due to information received from one or more 3D-camera(s) mounted on the mobile industrial robot it will not, when loaded with a pallet, enter the space if a pallet is already stored in the rack or if any obstacle, including a person, is present in the space. The space monitored by the 3D-camera is shown in the Figure (5).

The mobile industrial robot has mounted thereon one or more 3D-camera(s) to function as the "eyes" for the robot in order to sense if it may enter the storage rack with a pallet. This is assured by a control unit in the robot. The control unit may further communicate with one or more sensors, which may be used to detect one or more objects located proximate to the vehicle including pedestrians, other vehicles, racks, navigation markers, RFID chips, other types of objects, or any combination thereof. Additionally, one or more sensors may be configured to determine a distance, such as a distance to an object, a height of an object, a lift height, other types of distances and/or dimensions, or any combination thereof.

Moreover, in addition to the 3D-camera one or more sensors may be configured to monitor for an obstacle located proximate to the vehicle and to generate a proximity alert in response to detecting the obstacle. The control unit of the robot may be configured to disable the automated load handling operation in response to detecting the obstacle. In some examples, the control unit of the robot may receive an obstacle monitoring signal from one or more sensors located on the robot, and the robot may be placed in the automated mode of operation based, at least in part, on a determination that there are no immediate obstacles in the direction of travel.

Hence, the mobile industrial robot safely maneuvers around people and physical obstacles. The robot autonomously navigates to find the most efficient path to its destination. When it meets obstacles, it will automatically re-route to avoid costly lags in logistics processes.

## Claims

1. A mobile industrial robot movable into and out of a storage rack for depositing a pallet onto said storage rack, said robot comprising
- a system for lifting a loaded pallet;
- a control unit for controlling the movement of the robot;
- a 3-D camera mounted on the robot for sensing whether or not a loaded pallet and/or other obstacle is on the storage rack ahead of the robot,
wherein the 3-D camera records an image from the pallet rack, which is coupled to a processing unit that determines if an obstacle is present in the zone where the robot is about to deposit the pallet, and based on the recorded and processed image the control unit prevents the robot from depositing the pallet onto the storage rack unit until the pallet and/or other obstacle has been removed from the storage rack ahead of the robot.

2. The mobile industrial robot of claim 1, wherein the 3-D camera is mounted slightly ahead of the forward end of the robot with respect to its direction of travel.

3. The mobile industrial robot of claim 1, wherein the 3-D camera is mounted slightly ahead of the rearward end of the robot vehicle with respect to its direction of travel.

4. The mobile industrial robot according to any one of the claims 1-3, wherein the processing unit performs the processing of the recorded image based on an algorithm, whereby detection of an obstacle stops the mobile industrial robot from driving into the storage racks if the mobile industrial robot is on a mission to deliver a pallet or payload onto the storage rack.

5. The mobile industrial robot according to any one of the claims 1-4, wherein the processing unit is further programmed to set an alarm condition if the mobile industrial robot is on a mission to collect a pallet or payload on the storage rack and the 3D camera algorithm detects that no pallet or payload is present.

6. The mobile industrial robot according to any one of the claims 1-5, wherein the control unit may further communicate with one or more sensors, which may be used to detect one or more objects located proximate to the robot.

7. The mobile industrial robot according to claim 6, wherein the one or more sensors may be configured to monitor for an obstacle located proximate to the vehicle and to generate a proximity alert in response to detecting the obstacle.

8. The mobile industrial robot according to any one of the claims 1-7, wherein the robot may be placed in the automated mode of operation based, at least in part, on a determination that there are no immediate obstacles in the direction of travel.
